# EUROPEAN PATENT APPLICATION

(11) **EP 4 089 146 A1**
(43) Date of publication of application: **16.11.2022**
(21) Application number: 21173675.6
(22) Date of filing: 12.05.2021
(51) Int. Cl.: C08L 77/06, C09J 177/06, C08G 69/26, C08G 69/36

(54) **HOT-MELT ADHESIVE COMPOSITION**

(71) Applicant: ARKEMA FRANCE, 92700 Colombes (FR)
(72) Inventor: YASUDA, Maho, KYOTO, JAPAN, 600-8815 (JP); DANG, Patrick, 27470 SERQUIGNY, FRANCE (FR); PINEAU, Quentin, 27470 SERQUIGNY, FRANCE (FR)
(74) Representative: Arkema Patent

(57) **Abstract**

The present invention relates to a hot melt adhesive composition in the form of powder comprising at least one polyamide comprising at least one unit corresponding to the formula (diamine in Ca).(diacid in Cb), wherein the diamine is a secondary diamine and wherein the polyamide is chosen from a homopolyamide and a copolyamide; and at least one propylene-based polymer comprising at least one functional group chosen from an epoxy group and an acid anhydride group, wherein the at least one propylene-based polymer has a melting point from 120 to 145°C.

The present invention further relates to a method for making an article, and to an article.

The present invention further relates to the use of a polyamide comprising at least one unit corresponding to the formula (diamine in Ca).(diacid in Cb), wherein the diamine is a secondary diamine for the preparation of the above hot melt adhesive composition.

## Description

### Technical field

The present invention relates to a hot melt adhesive composition comprising at least one polyamide and at least one propylene-based polymer. The present invention also relates to a method for making an article using this composition, and to the resulting article.

### Technical background

Hot melt adhesives (HM adhesives) are substances which are solid at room temperature and which often comprise neither water nor solvent. They are applied in the molten state after heating to a temperature generally of between 100 and 250°C, most often between 130 and 180°C, and solidify during cooling, thus forming a seal (or adhesive joint) which ensures the attachment of the two substrates to be assembled. Hot melt adhesives are generally provided in the form of compositions which comprise a thermoplastic polymer and optionally a tackifying resin and a plasticizer.

Hot melt adhesives are widely used in various applications, such as packaging, bookbinding, woodworking, disposable nonwoven absorbent articles and fabrication of automobile parts as they have good stability and do not require the use of solvents. More particularly, nowadays, hot melt adhesives are widely used for the production of composite parts in the automotive industry for example for the production of composite parts for vehicle interiors.

In order to produce such composite materials, polyvinyl chloride (PVC) sheets are bonded to solid polypropylene parts by using polyurethane (PU) foams and reactive glue. In addition, the surface treatment of the polypropylene parts is often required to compensate the low adhesion between the polypropylene part and the PU foam.

Document JP 2002294191 A relates to a thermoplastic adhesive which is a foam and can be applied to a laminate such as an interior material for a vehicle such as an automobile. Such adhesive comprises a crystalline polyolefin, a non-crystalline polyolefin containing styrene polymer and an adhesive imparting agent composed of rosin resin.

Document EP 0388716 A1 relates to a hot-melt adhesive which is obtainable by melting A) from 40 to 80% by weight of copolymers based on propylene, B) from 7.5 to 50% by weight of ethylene copolymers with acrylic acid and/or esters thereof, and, in a total amount of up to 50% by weight, at least one of the components C) binary copolymers based on ethylene and D) copolyamides.

Document WO 2020/149134 A1 relates to an insulated wire with a fusible layer comprising a conductor; an insulating cover layer which covers the outer circumference of the conductor; and a fusible layer which is provided on the outer side of the insulating cover layer, and which is fusion bonded by means of heat. This insulated wire is configured such that: the insulating cover layer contains polyvinyl chloride; and the fusible layer contains a modified polyolefin resin and a polyamide resin.

There is thus a need for a hot melt adhesive composition, as well as a method, for making articles of good quality using said hot melt adhesive composition, notably for automotive parts, wherein the composition has improved adhesion properties. There is also a need to reduce production costs and improve recyclability of the article.

### Summary of the invention

It is a first object of the invention to provide a hot melt adhesive composition in the form of powder comprising:
- at least one polyamide comprising at least one unit corresponding to the formula (diamine in Ca).(diacid in Cb), wherein the diamine is a secondary diamine and wherein the polyamide is chosen from a homopolyamide and a copolyamide; and
- at least one propylene-based polymer comprising at least one functional group chosen from an epoxy group and an acid anhydride group, wherein the at least one propylene-based polymer has a melting point from 120 to 145°C.

According to some embodiments, the polyamide is a copolyamide further comprising at least one unit deriving from a lactam and/or an amino acid.

According to some embodiments, the functional group is a maleic anhydride group and/or the secondary diamine is piperazine.

According to some embodiments, the hot melt adhesive composition further comprises an additive which is a carbodiimide.

The invention further relates to a method for making an article, the method comprising:
- providing a layer which is chosen from a polyvinyl chloride layer and a thermoplastic polyurethane layer;
- applying at least one first composition in the form of a powder on a surface of the layer, the first composition comprising at least one polyamide comprising at least one unit corresponding to the formula (diamine in Ca).(diacid in Cb), wherein the diamine is a secondary diamine;
- melting the first composition in order to coat the surface of the layer;
- forming a part on the coated surface of the layer from a thermoplastic polymer.

According to some embodiments, the method further comprises, prior to the step of forming a part on the coated surface of the layer, the steps of:
- applying at least one second composition in the form of powder on the coated surface of the layer;
- melting the second composition to form an additional coat on the coated surface of the layer.

According to some embodiments, the first composition is the hot melt adhesive composition described above.

According to some embodiments, the second composition comprises at least one propylene-based polymer comprising at least one functional group chosen from an epoxy group and an acid anhydride group.

According to some embodiments, the secondary diamine is piperazine and/or the functional group is a maleic anhydride unit and/or the at least one propylene-based polymer has a melting point from 120 to 145°C.

According to some embodiments, the part is formed by injection molding.

According to some embodiments, the first composition further comprises an additive which is a carbodiimide.

The invention further relates to an article comprising:
- a layer which is chosen from a polyvinyl chloride layer and a thermoplastic polyurethane layer;
- an additional layer made from the hot melt adhesive composition described above, coated on one surface of the layer;
- a part which is a thermoplastic polymer part and wherein a surface of the part is in contact with the additional layer of the hot melt adhesive composition.

The invention further relates to an article comprising:
- a layer which is chosen from a polyvinyl chloride layer and a thermoplastic polyurethane layer;
- a first additional layer comprising at least one polyamide comprising at least one unit corresponding to the formula (diamine in Ca).(diacid in Cb), wherein the diamine is a secondary diamine, the first additional layer being coated on one surface of the layer;
- a second additional layer comprising at least one propylene-based polymer comprising at least one group chosen from an epoxy group and an acid anhydride group, the second additional layer being coated on the first additional layer;
- a part which is a thermoplastic polymer part and wherein a surface of the part is in contact with the second additional layer.

According to some embodiments, the secondary diamine is piperazine and/or the functional group is a maleic anhydride unit and/or the at least one propylene-based polymer has a melting point from 120 to 145°C.

The invention further relates to the use of a polyamide comprising at least one unit corresponding to the formula (diamine in Ca).(diacid in Cb), wherein the diamine is a secondary diamine for the preparation of the hot melt adhesive composition described above.

The present invention enables to address the abovementioned need. In particular the invention provides a hot melt adhesive composition, as well as a method, for making articles of good quality using said hot melt adhesive, notably for automotive parts, wherein the composition has improved adhesion properties at a reduced production cost. The obtained articles also have improved recyclability.

This is achieved by combining a at least one polyamide comprising at least one unit corresponding to the formula (diamine in Ca).(diacid in Cb), wherein the diamine is a secondary diamine and at least one propylene-based polymer comprising at least one group chosen from an epoxy group and an acid anhydride group, for use in a slush molding process.

The polyamide and the propylene-based polymer may be combined as a single HM adhesive composition in powder form, or they may be applied in two distinct steps in the slush molding process.

First of all, providing the HM adhesive in powder form makes it possible to achieve a higher adhesion relative to other forms, such as a film for example.

In addition, a preferred melting point range of 120 to 145°C for the propylene-based polymer makes it possible to more easily and efficiently melt the propylene-based polymer (relative to propylene-based polymer having a higher melting point) in a slush molding process, thereby producing articles of good quality.

Thus, the present invention makes it possible to avoid the use of further components and treatments, thus simplifying the manufacturing process and reducing production costs.

Furthermore, the hot melt adhesive composition according to the present invention allows an easier separation of the different layers of a fabricated article (for example relative to articles comprising PU foams and glue) which facilitates the recycling of the article.

### Detailed description

The invention will now be described in more detail without limitation in the following description.

### Polyamide

The invention makes use of at least one polyamide comprising at least one unit corresponding to the formula (diamine in Ca). (diacid in Cb), wherein the diamine is a secondary diamine. By "*secondary diamine*" is meant a compound comprising two amine groups, and wherein both amine groups are secondary amine groups (in other words wherein two substituents different from hydrogen are bound to the nitrogen atom). The formula (diamine in Ca).(diacid in Cb) can also be represented by the formula X.Y wherein X corresponds to the diamine Ca while Y corresponds to the diacid Cb.

In this formula, "a" represents the number of carbon atoms of the diamine and "b" represents the number of carbon atoms of the diacid, "a" and "b" each being independently from 8 to 50, and preferably from 8 to 18. For example, the number of carbons in the amine Ca may be from 4 to 26. In addition, the number of carbons in the diacid Cb may be from 4 to 24.

The polyamide may be a homopolyamide or a copolyamide. Preferably the polyamide is a copolyamide.

In case the polyamide according to the invention is a homopolyamide, it may comprise a single repeating unit corresponding to the formula (cycloaliphatic diamine in Ca). (diacid in Cb). By "*homopolyamide*" is meant a polyamide obtained from a single monomer, or, in the case of a polyamide of the diamine.diacid type, from a single pair of diamine and diacid. Such a homopolyamide then consists essentially of units corresponding to the formula (cycloaliphatic diamine in Ca). (diacid in Cb). By way of examples, the polyamide could be Pip.10 or Pip.12.

In case the polyamide according to the invention is a copolyamide, it may comprise at least two distinct repeating units, of which at least one of the units corresponds to the formula (diamine in Ca).(diacid in Cb). The copolyamide preferably further comprises at least one other unit obtained from an amino acid, obtained from a lactam, or corresponding to the formula (diamine in Ca').(diacid in Cb'), with "a'" representing the number of carbon atoms of the diamine and "b" representing the number of carbon atoms of the diacid, "a'" and "b" being each independently from 4 to 36, and preferably from 6 to 18.

The secondary diamine in Ca may be in particular a cycloaliphatic amine.

The secondary diamine in Ca may be chosen from piperazine, 4,4'-trimethylenepiperidine, 4,4'-methylenebis(N-1-methylpropyl) cyclohexanamine, 4,4'-methylenebis(N-1-methylpropyl)-3,3'-dimethylcyclohexanamine, 3,3,5-trimethyl-N-(propan-2-yl)-5-[(propan-2-ylamino)methyl]cyclohexamine and N,N'-di(3,3-dimethyl-2-butyl)-1,6-diaminohexane).

For example, commercial secondary amines used in the polyamide of the present invention may be CLEARLINK 1000^{®} and CLEARLINK 3000^{®} from Dorf Ketal Chemicals, JEFFLINK^{®} 754 from Huntsman and ETHACURE^{®} 90 from Albermarle Corporation.

According to preferred embodiments, the secondary amine in Ca is piperazine.

The diacid in Cb may be chosen from aliphatic diacids, which may be linear or branched, cycloaliphatic diacids and aromatic diacids.

In case the diacid is aliphatic and linear, it may preferably be chosen from succinic acid (b = 4), pentanedioic acid (b = 5), adipic acid (b = 6), heptanedioic acid (b = 7), octanedioic acid (b = 8), azelaic acid (b = 9), sebacic acid (b = 10), undecanedioic acid (b = 11), dodecanedioic acid (b = 12), brassylic acid (b = 13), tetradecanedioic acid (b = 14), hexadecanedioic acid (b = 16), octadecanedioic acid (b = 18), octadecenedioic acid (b = 18), eicosanedioic acid (b = 20), docosanedioic acid (b = 22).

In case the diacid is cycloaliphatic, it may contain the following carbon skeletons: norbornyl methane, cyclohexylmethane, dicyclohexylmethane, dicyclohexylpropane, di (methylcyclohexyl), di (methylcyclohexyl) propane.

In case the diacid is aromatic, it is preferably chosen from terephthalic acid (denoted T), isophthalic (denoted I) and naphthalene diacids, in particular isophthalic acid.

In case the copolyamide comprises units obtained from an amino acid, it may be chosen from 9-aminononanoic acid, 10-aminodecanoic acid, 10-aminoundecanoic acid, 11-aminoundecanoic acid and 12-aminododecanoic acid, as well as its derivatives, notably N-heptyl-11-aminoundecanoic acid.

In case the copolyamide comprises units obtained from a lactam, it may be chosen from pyrrolidinone, 2-piperidinone, caprolactam, enantholactam, caprylolactam, pelargolactam, decanolactam, undecanolactam, and lauryllactam.

In addition, in case the copolyamide comprises units corresponding to the formula (diamine in Ca'). (diacid in Cb'), the diacid in Cb' may be as described above provided that the unit corresponding to the formula (diamine in Ca'). (diacid in Cb') is different than the unit corresponding to the formula (diamine in Ca). (diacid in Cb).

The diamine in Ca' may be chosen from a linear or branched aliphatic diamine, a cycloaliphatic diamine, or an alkylaromatic diamine.

In case the diamine in Ca' is aliphatic and linear, of formula H₂N-(CH₂)a'-NH₂, the diamine in Ca' is preferably chosen from butanediamine (a = 4), pentanediamine (a = 5), hexanediamine (a = 6), heptanediamine (a = 7), octanediamine (a = 8), nonanediamine (a = 9), decanediamine (a = 10), undecanediamine (a = 11), dodecanediamine (a = 12), tridecanediamine (a = 13), tetradecanediamine (a = 14), hexadecanediamine (a = 16), octadecanediamine (a = 18), octadecenediamine (a = 18), eicosanediamine (a = 20), docosanediamine (a = 22) and diamines obtained from fatty acids.

In case the diamine in Ca' is aliphatic and branched, it may contain one or more methyl or ethyl substituents on the main chain. For example, the diamine in Ca' can advantageously be chosen from 2,2,4-trimethyl-1,6-hexanediamine, 2,4,4-trimethyl-1,6-hexanediamine, 1,3- diaminopentane, 2-methyl-1,5-pentanediamine, 2-methyl-1,8-octanediamine.

In case the diamine in Ca' is cycloaliphatic, it is preferably chosen from piperazine, an aminoalkylpiperazine, bis (3,5-dialkyl-4-aminocyclohexyl) methane, bis (3,5-dialkyl-4-aminocyclohexyl) ethane, bis (3,5-dialkyl-4-aminocyclo-hexyl) propane, bis(3,5-dialkyl-4-aminocyclo-hexyl) butane, bis-(3-methyl-4-aminocyclohexyl)-methane (BMACM or MACM), p-bis (aminocyclohexyl)-methane (PACM) and isopropylidenedi(cyclohexylamine) (PACP). It can also include the following carbon skeletons: norbornyl methane, cyclohexylmethane, dicyclohexylpropane, di (methylcyclohexyl), di (methylcyclohexyl) propane. A non-exhaustive list of these cycloaliphatic diamines is given in the publication "Cycloaliphatic Amines" (Encyclopaedia of Chemical Technology, Kirk-Othmer, 4th Edition (1992), pp. 386-405).

In case the diamine in Ca' is alkylaromatic, it is preferably chosen from 1,3-xylylene diamine and 1,4-xylylene diamine.

According to preferred embodiments, the polyamide may be chosen from Pip.9/Pip.12/11 (Pip=piperazine, 9=azelaic acid, 11=undecanedioic acid, 12=dodecanedioic acid), Pip.10/11 (10=sebacic acid), Pip.10/12, Pip.10/11/Pip.9, 6.10/Pip.10/Pip.12 (6=adipic acid), Pip.10 and Pip.12.

According to some embodiments, the polyamide may comprise (one or more different) units corresponding to the formula (diamine in Ca).(diacid in Cb) at a proportion by weight from 5 to 60% by weight, and preferably from 10 to 50 % by weight relative to all the polyamide units.

Furthermore, the polyamide may have a melt volume-flow rate (MVR) at 160°C under 2.16 kg from 2 to 300 cm³/10 min, preferably from 3 to 250 cm³/10 min, more preferably from 4 to 200 cm³/10 min, more preferably from 5 to 150 cm³/10 min, more preferably from 5 to 100 cm³/10 min and even more preferably from 5 to 50 cm³/10 min. The MVR is measured using according to the ISO 1133 standard.

The polyamide is provided in powder form. This powder form may be obtained by grinding the polyamide, preferably under liquid nitrogen.

The polyamides commercialized under the name Platamid^{®}, notably Platamid^{®} M1276, Platamid^{®} H2519, Platamid^{®} HX2592, Platamid^{®} H2703, and Platamid^{®} M2395 from Arkema can in particular be used.

### Propylene-based polymer

The invention also makes use of at least one propylene-based polymer comprising at least one a functional group chosen from an epoxy group and an acid anhydride group.

The propylene-based polymer according to the invention may be obtained by copolymerization of at least the propylene monomer and a monomer comprising the functional group (and possibly further monomers), or by grafting the functional group to an initial propylene-based polymer which can either be a homopolymer (comprising only propylene units) or a copolymer (further comprising additional units from at least one more monomer).

By "*propylene-based*" is meant that the polymer comprises at least 50 wt.% of propylene units.

Preferably, the propylene-based polymer is prepared by grafting the functional group to a homopolymer.

However, in case the propylene-based polymer is prepared by grafting the functional group to a copolymer, the additional units may in particular derive from a monomer chosen from ethylene, butene, octene and combinations thereof. Preferably, the additional units derive from ethylene monomers.

In addition, in case the propylene-based polymer is prepared by grafting the functional group to a copolymer, the propylene units may be present at a weight proportion higher or equal to 60 wt.%, and preferably higher or equal to 70 wt.%, relative to all the units of the propylene-based polymer.

As mentioned above, the propylene-based polymer according to the invention comprises at least one functional group chosen from an epoxy group or an acid anhydride group.

In case the propylene-based polymer comprises an epoxy group, such group may be chosen from aliphatic glycidyl esters and ethers such as allylglycidylether, vinylglycidylether, glycidyl maleate and itaconate, glycidyl acrylate and methacrylate, and alicyclic glycidyl esters and ethers such as 2-cyclohexene-1-glycidylether, cyclohexene-4,5-diglycidyl carboxylate, cyclohexene-4-glycidyl carboxylate, 5-norbornene-2-methyl-2-glycidyl carboxylate and endo-cis-bicyclo (2,2,1) -5-heptene-2,3-diglycidyl dicarboxylate.

In case the propylene-based polymer comprises an acid anhydride group, such group may be chosen from maleic anhydride, itaconic anhydride, citraconic anhydride and tetrahydrophthalic anhydride.

According to preferred embodiments, the propylene-based polymer comprises at least one maleic anhydride group.

According to some embodiments, the propylene-based polymer may comprise the at least one group (or unit) at a weight proportion from 0.1 to 15 wt.%, and preferably from 1 to 10 wt.% relative to all the units of the propylene-based polymer.

The propylene-based polymer preferably has a melting point from 120 to 145°C, and more preferably from 125 to 140°C. For example, the melting point of the propylene-based polymer may be from 120 to 125°C; or from 125 to 130°C; or from 130 to 135°C; or from 135 to 140°C; or from 140 to 145°C. This melting point is measured by DSC (differential scanning calorimetry) according to the standard ISO 11357-3: 2013.

This specific melting point range makes it possible to facilitate the manufacturing process and increase its efficiency, as the propylene-based polymer may be melted more easily at lower temperatures.

The propylene-based polymer is provided in powder form. This powder form may be obtained by grinding the propylene-based polymer, preferably under liquid nitrogen.

The propylene-based polymer may have density from 0.5 to 1.5 g/cm³, and preferably from 0.7 to 1.3 g/cm³. The density may be measured according to the standards ISO 1183 or ASTM D1505.

In addition, the propylene-based polymer may have a melt flow index (MFI) measured at a temperature of 230°C under a load of 2160 grams from 3 to 15 g/10 min, and preferably from 5 to 12 g/10 min. The MFI may be measured according to the standards ISO 1133 or ASTM D1238.

The propylene-based polymer may also have a Vicat softening temperature (load of 10 N) from 100 to 150°C, and preferably from 110 to 140°C. The Vicat softening temperature may be measured according to the standards ISO 306 or ASTM D1525.

### Hot melt adhesive composition

In some embodiments, the polyamide and the propylene-based polymer are combined as a hot melt adhesive composition in the form of powder.

By "*hot melt*" is meant that the adhesive composition is solid at 23°C. Preferably, the adhesive requires to be heated at least at 120°C, preferably at least at 140°C, in order to adhesively coat a substrate.

By "*powder*" is meant a composition in the form of solid particles. The volume median particle diameter of these particles (Dv50) may preferably be from 50 to 200 µm. The particle size distribution can be determined by laser diffraction.

The particles may also have a Dv10 particle size from 10 to 100 µm and preferably from 30 to 80 µm. The term Dv10 refers to the 10th percentile of the volume distribution of particle sizes, that is, 10% by volume of particles are smaller than Dv10 and 90% by volume are larger than Dv10. The Dv10 particle size can be determined by laser diffraction.

The particles may also have a Dv90 particle size from 250 to 500 µm and preferably from 300 to 400 µm. The term Dv90 refers to the 90th percentile of the volume distribution of particle sizes, that is, 90% by volume of particles are smaller than Dv90 and 10% by volume are larger than Dv90. The Dv90 particle size can be determined by laser diffraction.

The hot melt adhesive composition according to the invention may comprise the polyamide at an amount from 30 to 90% by weight, and preferably from 40 to 60% by weight relative to the total weight of the hot melt adhesive composition. Such amount may be from 30 to 35%; or from 35 to 40%; or from 40 to 45%; or from 45 to 50%; or from 50 to 55%; or from 55 to 60%; or from 60 to 65%; or from 65 to 70%; or from 70 to 75%; or from 75 to 80%; or from 80 to 85%; or from 85 to 90% by weight relative to the total weight of the hot melt adhesive composition.

The hot melt adhesive composition according to the invention may comprise the propylene-based polymer at an amount from 10 to 70% by weight, and preferably from 40 to 60% by weight relative to the total weight of the hot melt adhesive composition. Such amount may be from 10 to 15%; or from 15 to 20%; or from 20 to 25%; or from 25 to 30%; or from 30 to 35%; or from 35 to 40%; or from 40 to 45%; or from 45 to 50%; or from 50 to 55%; or from 55 to 60%; or from 60 to 65%; or from 65 to 70% by weight relative to the total weight of the hot melt adhesive composition.

The use of both the polyamide and the propylene-based polymer makes it possible to achieve high adhesion strength between two materials of a different nature, without the need for further surface treatment.

Additionally, the hot melt adhesive composition according to the invention may comprise one or more additives (preferably also in powder form) at a content from 0 to 5%; and preferably at a content from 1 to 3% by weight relative to the total weight of the hot melt adhesive composition. For example, the content in additives may be from 0 to 1%; or from 1 to 2%; or from 2 to 3%; or from 3 to 4 %; or from 4 to 5 % by weight relative to the total weight of the hot melt adhesive composition.

Such additives may be chosen from a tackifying resin, a plasticizer, a stabilizer (antioxidant), a wax, inert colorants such as titanium dioxide as well as fillers, surfactants, other types of polymers, hydrolysis stabilizers, crosslinking agents, nucleating agents, reactive compounds, fire-retardant mineral or organic agents, ultraviolet (UV) or infrared (IR) light absorbing agents, and UV or IR fluorescing agents. Typical fillers include talc, calcium carbonate, clay, silica, mica, wollastonite, feldspar, aluminum silicate, alumina, hydrated alumina, glass microspheres, ceramic microspheres, thermoplastic microspheres, baryte, wood flour and combinations thereof.

According to preferred embodiments, the additive may comprise or consist of a carbodiimide, bis-lactams, statistical copolymers of styrene and methacrylate and glycidyl resins (for example sold by BASF under the name of Joncryl^{®}). The presence of an additive such as carbodiimide makes it possible to increase the resistance of the composition to thermal aging and hydrolysis.

The hot melt adhesive composition according to the present invention may be obtained by mixing together the powder of polyamide and the powder of propylene-based polymer, optionally together with one or more additives, in order to form a powder blend.

### Manufacturing method

The present invention also relates to a method for making an article, notably an article for an automotive part, preferably by a slush molding process as described in more detail below.

The method according to the invention comprises a step of providing a layer chosen from a polyvinyl chloride (PVC) layer and a thermoplastic polyurethane (TPU) layer.

For example, this layer may be in the form of a sheet. Such sheet may be formed, for example, by rotational molding, such as powder slush molding. This sheet may have a thickness from 0.5 to 5 mm, and preferably from 1 to 2 mm.

The layer may be placed in a mold.

At least one first composition in the form of a powder is applied (or poured) on the layer and more particularly on at least one surface of the layer. The first composition comprises at least one polyamide comprising at least one unit corresponding to the formula (diamine in Ca).(diacid in Cb), wherein the diamine is a secondary diamine.

According to some embodiments, notably when only one composition is applied on the layer, such first composition may correspond to the hot melt adhesive composition described above.

In other embodiments, notably when more than one compositions are applied on the layer (as illustrated below), the first composition may be devoid of the propylene-based polymer described above. In other words, the first composition may comprise the polyamide mentioned above, and also one or more additives (as described above) but may be devoid of the propylene-based polymer. In this case, the first composition may comprise the polyamide at an amount equal to or higher than 70% by weight, preferably equal to or higher than 80% by weight, and more preferably equal to or higher than 90% by weight relative to the total weight of the first composition. For example, the first composition may comprise the polyamide at an amount from 70 to 75%; or from 75 to 80 %; or from 80 to 85%; or from 85 to 90%; or from 90 to 95%; or from 95 to 99% or higher than 99% by weight relative to the total weight of the first composition.

According to some embodiments, the first composition may essentially consist, or even consist of the polyamide and the one or more additives. A preferred additive is a carbodiimide.

Thus, the first composition may be applied on the surface of the layer so as to create a layer of powder on the surface of the layer. The amount of powder may be selected so as to form a layer having a thickness of 200 µm.

The layer comprising such layer of powder may then be heated at a temperature from 120 to 200°C, and preferably from 140 to 180°C so as to melt the first composition and coat the surface of the layer. Heating may be carried out in an oven or alternatively in the mold during the rotational molding process.

According to some embodiments, such step may be carried out at ambient pressure.

According to other embodiments, this step may be carried out by adding a weight on top of the powder layer, so as to create an absolute pressure from 120 to 180 kPa, and preferably from 130 to 170 kPa.

In addition, the step of heating the coated layer may have a duration from 1 minute to 1 hour, and preferably from 1 to 10 minutes.

Alternatively, the layer may be heated prior to the application of the first composition. In this case, after heating the layer, the first composition may be applied to the heated layer so as to directly melt the first composition upon pouring and thus coat the surface of the layer. The temperature may be the same as the one mentioned above. The excess of the first composition (for example the part of the composition that has not melted) may be drained off.

According to some embodiments, the method according to the present invention comprises a step of applying to the layer, notably to the surface of the layer coated with the first composition, a second composition in the form of powder so as to create a layer of powder on the coated surface of the layer. The amount of powder may be selected so as to form a layer having a thickness of 200 µm.

The second composition may comprise at least one propylene-based polymer comprising at least one group chosen from an epoxy group and an acid anhydride group, wherein the at least one propylene-based polymer has a melting point from 120 to 145°C. In other words, the propylene-based polymer is as detailed above. Thus, when a second composition is applied on the coated layer, such composition may comprise a propylene-based polymer as described above and may be devoid of a polyamide as described above and/or devoid of one or more additives.

In this case, the second composition may comprise the propylene-based polymer at an amount equal to or higher than 70% by weight, preferably equal to or higher than 80% by weight, and more preferably equal to or higher than 90% by weight relative to the total weight of the second composition. For example, the second composition may comprise the propylene-based polymer at an amount from 70 to 75%; or from 75 to 80 %; or from 80 to 85%; or from 85 to 90%; or from 90 to 95%; or from 95 to 99% or higher than 99% by weight relative to the total weight of the second composition.

According to some embodiments, the second composition may essentially consist, or even consist of the propylene-based polymer.

The layer comprising the first and second composition may then be heated at a temperature from 120 to 200°C, and preferably from 140 to 180°C so as to melt the second composition and further coat the surface of the layer. Heating may be carried out in an oven or alternatively in the mold during the rotational molding process.

According to some embodiments, such step may be carried out at ambient pressure.

According to other embodiments, this step may be carried out by adding a weight on top of the powder layer, so as to create an absolute pressure from 120 to 180 kPa, and preferably from 130 to 170 kPa. In addition, the step of heating the coated layer may have a duration from 1 minute to 1 hour, and preferably from 1 to 10 minutes.

Alternatively, the layer (already coated with the first composition) may be heated prior to the application of the second composition. In this case, after heating the coated layer, the second composition may be applied to the heated layer so as to melt the second composition and form an additional coating on the surface of the layer. The temperature may be the same as the one mentioned above. In this embodiment, the excess of the second composition (for example the part of the composition that has not melted) may be drained off.

In some variants, the first composition may comprise the polyamide and be devoid of the propylene-based polymer, while the second composition may comprise a mixture of polyamide and propylene-based polymer; or the first composition may comprise the polyamide and the propylene-based polymer, while the second composition may comprise the propylene-based polymer and be devoid of the polyamide; or both the first composition and second composition may comprise a mixture of polyamide and propylene-based polymer, the weight ratio of polyamide to propylene-based polymer being higher in the first composition than in the second composition.

In some variants, more than two compositions are successively applied and coated as described above.

The method according to the present invention further comprises a step of forming a part on the coated surface of the layer (thus comprising the first and optionally the second composition). The part is a thermoplastic polymer part. Preferably the thermoplastic polymer may be polypropylene, acrylonitrile butadiene styrene polymer, and more preferably the thermoplastic polymer may be polypropylene.

Thus, the part may be formed by injection molding of the part on the coated surface of the layer, in other words by injecting the part in a molten state into a mold comprising the coated layer.

The injection of the part may be carried out at a temperature from 200 to 260°C.

Furthermore, this injection may be carried out at a pressure from 10 to 100 MPa, and preferably from 30 to 60 MPa.

After the injection of the part on the coated layer, the mold may be cooled down, for example at a temperature from 10 to 50°C, and preferably at a temperature from 20 to 40°C so as to solidify the part, prior to removing the mold.

### Article

The invention further relates to an article, notably to an article used as an automotive part. According to some embodiments, such articles may be obtained by using the method set out above.

The article according to the invention comprises a layer and a part and one or more additional layers between the layer and the part.

The layer may be as described above.

The part may also be as described above.

According to some embodiments, the article according to the invention comprises one additional layer between the layer and the part. In this case, this additional layer is made from the hot melt adhesive composition described above, i.e. it comprises the polyamide, the propylene-based polymer and the optional additives described above, in the proportions described above.

According to other embodiments, the article according to the invention comprises a first additional layer and a second additional layer. In this case, the first additional layer is in contact with the layer and the second additional layer, while the second additional layer is in contact with the first additional layer and the part.

In this case, the first additional layer is made from the first composition, as described above (and therefore comprises or consists of the above-described polyamide).

The second additional layer is made from the second composition also as described above (and therefore comprises or consists of the above-described propylene-based polymer).

The fact that the article comprises two different additional layers between the layer and the part makes it possible to obtain articles having a higher adhesion strength and thus, articles that are less likely to be damaged and peeled off. This is due to the fact that the second additional layer comprising the propylene-based polymer and devoid of the polyamide has a higher affinity for the part compared to an additional layer comprising both the polyamide and the propylene-based polymer.

The article according to the invention may be an automotive part, such as a composite part for vehicle interiors. For example, this article can be chosen from the dashboard of a car, car armrests, truck mudguards, ducting, diesel fuel tanks and toolboxes.

It may further be chosen among other articles such as tanks for storing water or chemicals; material handling products such as containers, crates, pallet sand insulated fish and cooler boxes; environmental products including litter bins, road signs and bollards, traffic dividers and road cones; tornado shelters and underground cellars for wine and vegetable storage; floats, buoys and pontoons; kayaks, canoes and boats; products for the outdoors such as garden planters, water butts and furniture; toys and playground equipment such as pet houses, toys, doll parts, footballs, helmets, playground slides; and lightweight components for the aerospace industry.

### Examples

The following examples illustrate the invention without limiting it.

### Example 1

Different articles were prepared according to the present invention.

Articles A to F comprise a PVC sheet as the layer and a polypropylene (PP) sheet as the part.

Articles A to C comprise two additional layers between the PVC layer and the PP part while articles D to F comprise one additional layer between the PVC layer and the PP part, as illustrated on the table below.

The PP is a homopolymer PP having a MVR of 30g/10min at 230°C and 2.16kg.

The PVC sheet comprises approximately 18 wt.% of PVC, approximately 70 wt.% of tris(2-ethylhexyl)trimellitate plasticizer and 11 wt.% of carbon black.

### Preparation of Articles A to C (bilaver):

A PVC sheet was cut into a sheet of 100 mm x 100 mm and the polyamide powder was scattered on the surface of the PVC sheet in an amount of 0.8 or 1.2 g.

The sheet comprising the polyamide powder was heated for 5 minutes at 150°C in an oven and at a pressure of around 150 kPa.

After this step, the coated PVC sheet was removed from the oven, propylene-based polymer powder was scattered on the coated surface of the PVC sheet in an amount of 0.8 or 1.2 g and the coated sheet was then heated for 5 minutes at 170°C in the oven and at a pressure of around 150 kPa.

The coated PVC sheet was then inserted into a mold (dimension: 100mm x 100 mm x 1 mm) of an injection machine (Toshiba is80FPA3-2A), and PP was injected onto the coated layers. During the injection, the cylinder temperature was 230°C, the mold temperature was 80°C and the injection speed was 34.1 cm³/sec.

### Preparation of articles D to F (monolaver):

A PVC sheet was cut into a sheet of 100 mm x 100 mm and a mixture of polyamide and propylene-based polymer in the form of powder was scattered on the surface of the PVC sheet in an amount of 2 g.

The sheet comprising the powder was heated for 10 minutes at 170°C in the oven and at a pressure of around 150 kPa.

The coated PVC sheet was then inserted into a mold (dimension: 100 mm x 100 mm x 1 mm) of an injection machine (Toshiba is80FPA3-2A), and PP (homopolymer) was injected onto the coated layers. During the injection, the cylinder temperature was 230°C, the mold temperature was 80°C and the injection speed was 34.1 cm³/s.

The following products were used for the preparation of the above articles:
- PA-A powder: A polyamide powder comprised of particles of median particle diameter Dv50 around 170 µm and comprising Pip.9/Pip.12/11 (Pip=piperazine, 9=azelaic acid, 11=undecanedioic acid, 12=dodecanedioic acid) in a weight ratio of 15/70/15. The melting point of this polyamide is 110°C;
- PA-B powder: A polyamide powder comprised of particles of median particle diameter Dv50 around 170 µm and comprising Pip.10/11 (10=sebacic acid) in a weight ratio of 20/80. The melting point of this polyamide is from 120 to 130°C;
- PBP-A powder: A maleic anhydride grafted polypropylene powder, the median particle diameter Dv50 of which is from 100 to 300 µm. The melting point of this polypropylene is 134°C.

Each article was then can into a rectangle piece having a width of 25 mm and a peeling test was carried out according to the ISO 29862 standard (180 degree peeling test) in a SHIMADZU Autograph AGS-X apparatus, at a speed of 5 mm/min. The articles were preconditioned at 23°C and at a relative humidity of 50% for a week.

| | Article | Composition | Average Force at 20-60mm stroke (N) |
|---|---|---|---|
| Bilayer | A | PA-A (1.2 g) | 67.3 |
| | | PBP-A (0.8 g) | |
| | B | PA-A (0.8 g) | 92.1 |
| | | PBP-A (1.2 g) | |
| | C | PA-B (0.8 g) | 61.4 |
| | | PBP-A (1.2 g) | |
| Monolayer | D | PA-A+PBP-A (60/40) | 11.8 |
| | E | PA-A+PBP-A (40/60) | 18.5 |
| | F | PA-B+PBP-A (60/40) | 39.3 |

From the above table, we can conclude that the above articles which are according to the invention have good adhesion strength due to the combination of a polyamide and a propylene-based polymer according to the invention.

### Example 2

Two comparative articles were made by using the same components in the form of a film.

Article G (bilayer) was made by placing onto a PVC sheet (100 mm x 100 mm) a film of a polyamide (PA-A film) followed by a film of a propylene-based polymer (PBP-A film). Each film had a thickness of 100 µm. These films were prepared by co-extrusion by using a PLABOR UT-20-H extruder and a HAKKE PolyDrive R252 extruder which were combined at cross-head die.

The sheet comprising the two films was heated for 10 minutes at 170°C in the oven and at a pressure of around 150 kPa.

The same process as the one detailed in Example 1 was used to put in contact the PVC sheet with the PP layer.

Article H (monolayer) was prepared by placing onto a PVC sheet (100 mm x 100 mm) a film comprising a mixture of polyamide and propylene-based polymer (50/50). The film had a thickness of 200 µm. This film was prepared by extrusion by using a HAAKE PolyDrive R252 extruder.

The sheet comprising the film was heated for 10 minutes at 170°C in an oven and at a pressure of around 150 kPa.

The same process as the one detailed in Example 1 was used to put in contact the PVC sheet with the PP layer.

A peeling test was carried out for each article as explained in Example 1, and the values were compared to the values obtained when the articles were produced by using a powder instead of a film.

| | Articles | Average Force at 20-60mm stroke (N) |
|---|---|---|
| Bilayer | A (powder) | 67.3 |
| | G (film) | 22.0 |
| Monolayer | D (powder) | 11.8 |
| | H (film) | 5.0 |

From the above, we can conclude that when the article is prepared by using the components in the form of powder (A and D) instead of film (G and H), the structure presents a higher adhesion strength, thus better adhesion properties.

### Example 3

Article I was prepared as detailed in Example 1 for article A.

Article J was prepared as detailed in Example 1 for article D.

The difference between article I and A and article J and D was the type of polyamide. In the case of articles I and J, the following polyamide (not according to the invention) was used:
- PA-C: Polyamide powder comprised of particles of average particle diameter around 80 µm and comprising PA 6/6.6/11/12 in a weight ratio of 30/15/10/45. The melting point of this polyamide is from 110 to 118°C.

A peeling test was carried out for articles I and J as explained in Example 1, and the values were compared to the values obtained for articles A and D respectively.

| | Articles | Average Force at 20-60mm stroke (N) |
|---|---|---|
| Bilayer | A (inv) | 67.3 |
| | I (comp) | 0.8 |
| Monolayer | D (inv) | 11.8 |
| | J (comp) | 1.8 |

From the above, we can conclude that when the article is prepared by using a polyamide according to the invention (A and D), the structure presents a higher adhesion strength, thus better adhesion properties.

### Example 4

Articles K and L were prepared as described in Example 1 for articles D to F.

The difference between article K and article D is that the layer was prepared only with PBP-A powder (and is thus devoid of polyamide).

The difference between article L and article D is that the layer was prepared only with PA-A (and is thus devoid of propylene-based polymer).

A peeling test was carried out for articles K and L as explained in Example 1, and the values were compared to the values obtained for articles A and D respectively.

| | Articles | Average Force at 20-60mm stroke (N) |
|---|---|---|
| Bilayer | A | 67.3 |
| Monolayer | D | 11.8 |
| | K | 0 |
| | L | 3.6 |

From the above, it is clear that both the polyamide component and the propylene-based component according to the invention are necessary, to provide articles with good adhesive properties.

## Claims

1. A hot melt adhesive composition in the form of powder comprising:
- at least one polyamide comprising at least one unit corresponding to the formula (diamine in Ca).(diacid in Cb), wherein the diamine is a secondary diamine and wherein the polyamide is chosen from a homopolyamide and a copolyamide; and
- at least one propylene-based polymer comprising at least one functional group chosen from an epoxy group and an acid anhydride group, wherein the at least one propylene-based polymer has a melting point from 120 to 145°C.

2. The hot melt adhesive composition according to claim 1, wherein the polyamide is a copolyamide further comprising at least one unit deriving from a lactam and/or an amino acid.

3. The hot melt adhesive composition according to any one of claims 1 to 2, wherein the functional group is a maleic anhydride group and/or wherein the secondary diamine is piperazine.

4. The hot melt adhesive composition according to any one of claims 1 to 3, further comprising an additive which is a carbodiimide.

5. A method for making an article, the method comprising:
- providing a layer which is chosen from a polyvinyl chloride layer and a thermoplastic polyurethane layer;
- applying at least one first composition in the form of a powder on a surface of the layer, the first composition comprising at least one polyamide comprising at least one unit corresponding to the formula (diamine in Ca).(diacid in Cb), wherein the diamine is a secondary diamine;
- melting the first composition in order to coat the surface of the layer;
- forming a part on the coated surface of the layer from a thermoplastic polymer.

6. The method according to claim 5, further comprising, prior to the step of forming a part on the coated surface of the layer, the steps of:
- applying at least one second composition in the form of powder on the coated surface of the layer;
- melting the second composition to form an additional coat on the coated surface of the layer.

7. The method according to claim 5, wherein the first composition is the hot melt adhesive composition according to any one of claims 1 to 4.

8. The method according to claim 6, wherein the second composition comprises at least one propylene-based polymer comprising at least one functional group chosen from an epoxy group and an acid anhydride group.

9. The method according to claim 8, wherein the secondary diamine is piperazine and/or wherein the functional group is a maleic anhydride unit and/or wherein the at least one propylene-based polymer has a melting point from 120 to 145°C.

10. The method according to claim 5 to 9, wherein the part is formed by injection molding.

11. The method according to any one of claims 5 to 10, wherein the first composition further comprises an additive which is a carbodiimide.

12. An article comprising:
- a layer which is chosen from a polyvinyl chloride layer and a thermoplastic polyurethane layer;
- an additional layer made from the hot melt adhesive composition according to any one of claims 1 to 4, coated on one surface of the layer;
- a part which is a thermoplastic polymer part and wherein a surface of the part is in contact with the additional layer of the hot melt adhesive composition.

13. An article comprising:
- a layer which is chosen from a polyvinyl chloride layer and a thermoplastic polyurethane layer;
- a first additional layer comprising at least one polyamide comprising at least one unit corresponding to the formula (diamine in Ca).(diacid in Cb), wherein the diamine is a secondary diamine, the first additional layer being coated on one surface of the layer;
- a second additional layer comprising at least one propylene-based polymer comprising at least one group chosen from an epoxy group and an acid anhydride group, the second additional layer being coated on the first additional layer;
- a part which is a thermoplastic polymer part and wherein a surface of the part is in contact with the second additional layer.

14. Article according to claim 13, wherein the secondary diamine is piperazine and/or wherein the functional group is a maleic anhydride unit and/or wherein the at least one propylene-based polymer has a melting point from 120 to 145°C.

15. Use of a polyamide comprising at least one unit corresponding to the formula (diamine in Ca).(diacid in Cb), wherein the diamine is a secondary diamine for the preparation of the hot melt adhesive composition according to any one of claims 1 to 4.
